# EUROPÄISCHE PATENTSCHRIFT

(11) **EP 3 754 402 B1**
(45) Veröffentlichungstag und Bekanntmachung des Hinweises auf die Patenterteilung: **24.06.2026**
(21) Anmeldenummer: 20180710.4
(22) Anmeldetag: 10.12.2008
(51) Int. Cl.: G02B 21/00, G01N 21/64, G02B 21/10, G02B 21/06, G02B 26/08, G02B 27/09, G02B 27/58, G02B 21/16

(54) **MIKROSKOP**
MICROSCOPE
MICROSCOPE

(30) Priorität: 20.12.2007 DE 102007063274
(43) Veröffentlichungstag der Anmeldung: 23.12.2020
(62) Teilanmeldung aus: 19160825.6
(73) Patentinhaber: Carl Zeiss Microscopy GmbH, 07745 Jena (DE)
(72) Erfinder: LIPPERT, Helmut, 07745 Jena (DE); WOLLESCHENSKY, Ralf, 07743 Jena (DE); ROHRBACH, Alexander, 79100 Freiburg (DE); FAHRBACH, Florian, 68167 Mannheim (DE)
(74) Vertreter: Loritz, Rainer

(56) Entgegenhaltungen:
- WO-A1-2007/009812
- DE-A1- 10 257 423
- US-A1- 2004 031 930
- BREUNINGER T ET AL: "Lateral modulation boosts image quality in single plane illumination fluorescence microscopy", OPTICS LETTERS, OPTICAL SOCIETY OF AMERICA, US, vol. 32, no. 13, 1 July 2007 (2007-07-01), pages 1938 - 1940, XP002529108, ISSN: 0146-9592, DOI: 10.1364/OL.32.001938
- ENGELBRECHT C J ET AL: "RESOLUTION ENHANCEMENT IN A LIGHT-SHEET-BASED MICROSCOPY (SPIM)", OPTICS LETTERS, OSA, OPTICAL SOCIETY OF AMERICA, WASHINGTON, DC, US, vol. 31, no. 10, 15 May 2006 (2006-05-15), pages 1477 - 1479, XP001242795, ISSN: 0146-9592

## Beschreibung

Die Erfindung betrifft ein Mikroskop, welches ein Abbildungsobjektiv zur Abbildung einer Probe auf einen Detektor sowie Mittel zur Beleuchtung der Probe mit einem Lichtblatt in der Fokusebene des Abbildungsobjektivs umfasst. Die Mittel zur Beleuchtung umfassen eine kohärentes Licht abstrahlende Beleuchtungsquelle.

Ein Mikroskop, bei dem Beleuchtungsstrahlengang und Detektionsstrahlengang im wesentlichen senkrecht zueinander angeordnet sind, und bei der die Probe mit einem Lichtblatt in der Fokusebene des Abbildungsobjektivs, d.h. senkrecht zu dessen optischer Achse, beleuchtet wird, ist für die Untersuchung von Proben nach dem Verfahren der *Selective-Plane-Illumination-Microscopy* (SPIM) ausgelegt. Im Unterschied zur konfokalen Laser-Scanning-Mikroskopie (LSM), bei der eine dreidimensionale Probe in einzelnen, unterschiedlich tiefen Ebenen Punkt für Punkt abgetastet wird und die dabei gewonnenen Bildinformationen nachfolgend zu einer dreidimensionalen Abbildung der Probe zusammengesetzt werden, beruht die SPIM-Technologie auf der Weitfeldmikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Prinzipiell werden bei der SPIM-Technologie Fluorophore, die in der Probe enthalten sind oder in diese eingebracht werden, mit Laserlicht angeregt, welches zu einem sogenannten Lichtblatt geformt ist. Mit dem Lichtblatt wird jeweils eine ausgewählte Ebene in der Tiefe der Probe beleuchtet und mit einer Abbildungsoptik ein Bild dieser Probenebene in Form eines optischen Schnitts gewonnen. Im wesentlichen äquivalent zu einer solchen Anregung mit einem statischen Lichtblatt ist die schnelle Hin- und Herbewegung eines dünnen, rotationssymmetrischen Laserstrahls in der Fokusebene des Abbildungsobjektivs. Effektiv, d.h. im zeitlichen Mittel über den Zeitraum der Beobachtung, ergibt sich somit die Form eines Lichtblatts.

Die SPIM-Technologie ist beispielsweise beschrieben in Stelzer et al., Optics Letters 31, 1477 (2006), in Stelzer et al., Science 305, 1007 (2004), in der DE 102 57 423 A1, in der WO2004/0530558 A1 und in Breuniger et al., Optics letters 32, 1938 (2007).

Ein Nachteil der bekannten Technologien besteht darin, dass bei ihnen ein Kompromiss hinsichtlich axialer Auflösung einerseits und Bildfeldgröße andererseits eingegangen werden muss, da die Erzeugung eines absolut ebenen Lichtblattes ohne jegliche Strahldivergenz prinzipiell nicht möglich ist. Wird das Lichtblatt beispielsweise im Fokus einer Zylinderlinse erzeugt, so ergibt sich ein hyperbolisches Strahlprofil. Das beobachtbare Bildfeld, d.h. der Bereich, in dem annähernd die Bedingungen an ein ebenes Lichtblatt erfüllt sind, korrespondiert hinsichtlich seiner Ausdehnung entlang der Beleuchtungsrichtung mit der Schärfentiefe der verwendeten Zylinderlinse und der daran hängenden Optik. Die Schärfentiefe wiederum hängt direkt von der numerischen Apertur der Zylinderlinse ab und ist daher mit der axialen Auflösung entlang der optischen Achse des Abbildungsobjektivs gekoppelt. In der Regel wird die numerische Apertur so gewählt, dass die axiale Ausdehnung des Lichtblatts in den Randbereichen des interessierenden Bildfeldes etwa doppelt so groß wie im Bildzentrum ist. Typischerweise liegen die numerischen Aperturen im Bereich um 0,05. Die Möglichkeiten zur Beobachtung großflächiger Probenbereiche mit hoher axialer Auflösung sind daher eng begrenzt. Dieses Problem besteht nicht nur bei der Verwendung eines statischen Lichtblattes, sondern auch bei der Verwendung eines Strahls, der abtastend über die Probe geführt wird.

Ein weiteres Problem, was bei den bekannten SPIM-Verfahren überwiegend besteht, ist Schattenwurf in der Probe. Da in Bezug auf die Detektionsrichtung die Probe von der Seite mit relativ geringer numerischer Apertur bestrahlt wird, und einige Bereiche in der Probe höhere Absorptionsraten aufweisen bzw. Licht stärker streuen als andere, kommt es in der Beleuchtungsrichtung hinter diesen Bereichen zu gegenüber der Umgebung abgedunkelten Gebieten, die sich als Schatten des stärker absorbierenden bzw. streuenden Bereichs bemerkbar machen. In Aufnahmen, die mit SPIM-Technologie gewonnen werden, führt dies zu einem Streifenmuster. Dies ist beispielsweise der Fall bei den in der DE 102 57 423 A1 und in der DE 10 2005 027 077 A1 beschriebenen Anordnungen. Mit diesen wird ein starres Lichtblatt erzeugt, dass in seiner Dicke, d.h. seiner Ausdehnung entlang der optischen Achse des Abbildungsobjektivs - im folgenden mit Z bezeichnet - nicht variabel ist. Der Schattenwurf lässt sich reduzieren, wenn die Probenebene aus unterschiedlichen Winkeln in der Fokusebene - der XY-Ebene - mit einem Lichtblatt beleuchtet wird, wozu entweder eine Vielzahl von Lichtquellen oder ein sich bewegendes optisches Element wie ein Scannerspiegel oder ein räumlicher Lichtmodulator (SLM) notwendig sind, wie in der DE 10 2007 015063.8 beschrieben wird. Eine Reduzierung der Effekte des Schattenwurfs wird auch durch sukzessive Verwendung zweier Lichtblätter von zwei einander gegenüberliegenden Seiten erreicht, wobei zusätzlich der Einstrahlwinkel variiert werden kann, wie in einem Artikel von Huisken et al., Optics Letters 32 (17), 2007, S.2608-2610, beschrieben wird. Der Aufbau ist jedoch sehr aufwendig, ebenso wie die anschließende Auswertung.

Eine Schattenbildung tritt auch bei dem in der EP 0 248 204 B1 und in der US 4,826,299 beschriebenen Anordnungen auf. In jedem Fall sind Anordnungen, die den Schattenwurf zumindest reduzieren, aufwendig gebaut und benötigen eine erhebliche Anzahl von Komponenten, die aufeinander abgestimmt werden müssen.

Auf der anderen Seite werden beispielsweise zur Erzeugung von optischen Pinzetten sogenannte Besselstrahlen verwendet, d.h. beugungsfreie Strahlen, deren transversales Intensitätsprofil - im Falle eine SPIM-Mikroskops also entlang der Z-Achse, der optischen Achse des Abbildungsobjektivs - sich entlang der optischen Achse des Beleuchtungsstrahls - hier der X-Richtung - nicht ändert. Das transversale Intensitätsprofil dieser Strahlen lässt sich als Besselfunktion oder als eine Überlagerung von Besselfunktionen beschreiben und ist üblicherweise rotationssymmetrisch. Die Erzeugung einer optischen Pinzette mit Hilfe von Besselstrahlen ist beispielsweise in einem Artikel von K. Dholakia et al., Nature Vol.419, 2002, Seite 145-147 beschrieben. Zur Erzeugung von Besselstrahlen kann man beispielsweise konische Linsen, sogenannte Axikons, verwenden, wie in einem Artikel von Arimoto et al., Applied Optics Vol.31, Nr.31 (1992), Seite 6653-6657 beschrieben ist. Die Funktion eines Axikons kann auch von einem entsprechend geformten, rotationssymmetrischen diffraktiven optischen Element (DOE) in Form eines Transmissions- oder Phasengitters übernommen werden. Die Verwendung eines solchen Phasengitters zur Erzeugung von Besselstrahlen im Rahmen der Laser-Scanning-Mikroskopie zur Fluoreszenzuntersuchung ist beispielsweise in einem Artikel von Wilson et al., Optics Communications 268 (2006), Seite 253-260 beschrieben.

Eine wesentliche Eigenschaft dieser rotationssymmetrischen Besselstrahlen ist, dass der Schattenwurf auf einen kleinen Bereich hinter dem einen Schatten erzeugenden Objekt beschränkt ist, anschließend findet eine Rekonstruktion des Besselstrahls statt.

Aufgabe der Erfindung ist es daher, eine Anordnung zu entwickeln, die die oben genannten Nachteile des Standes der Technik überwindet, insbesondere also ein Lichtblatt mit einer erhöhten Schärfentiefe im Bildfeld zu erzeugen, wobei bevorzugt auch auf einfache Weise der Schattenwurf verringert bzw. vermieden werden soll.

Diese Aufgabe wird bei einem Mikroskop der eingangs beschriebenen Art dadurch gelöst, dass die Mittel zur Beleuchtung eine Besseloptik umfassen, die aus einem Lichtstrahl mindestens zwei ebene Wellen erzeugt und den ebenen Wellen Ausbreitungsrichtungen vorgibt, wobei die Ausbreitungsrichtung jeder der ebenen Wellen mit der Fokusebene jeweils einen spitzen Winkel einschließt, dessen Betrag für jede der ebenen Wellen gleich ist, so dass die ebenen Wellen in der Fokusebene konstruktiv interferieren, wodurch ein Lichtblatt erzeugt wird. Während die im Stand der Technik beschriebenen Mittel zur Erzeugung von Besselstrahlen ausschließlich rotationssymmetrische Besselstrahlen mit einer Vielzahl von einander überlagernden ebenen Wellen erzeugen, werden in der erfindungsgemäßen Besseloptik nur mindestens zwei ebene Wellen erzeugt, wobei zwei in der Regel schon ausreichend sind und einen guten Kompromiss bezüglich der konstruktiven Anforderungen einerseits und der Lichtblattqualität andererseits darstellen. Dennoch können auch mehr als zwei ebene Wellen verwendet werden. Die Wellen laufen aufeinander zu und interferieren in dem Bereich, in dem sie einander überlagern, konstruktiv, so dass ein Lichtblatt erzeugt wird. Bei entsprechender Anordnung der Besseloptik in Bezug auf das Abbildungsobjektiv findet diese konstruktive Interferenz in der Fokusebene statt. Der spitze Winkel, den die beiden Ausbreitungsrichtungen mit der Fokusebene bzw. der Ebene, in der die konstruktive Interferenz stattfindet, einschließen, hängt von der gewünschten Bildfeldgröße und damit verbunden von der gewünschten Lichtblattdicke ab. Außerdem können aufgrund der bei der Interferenz entstehenden Nebenmaxima sogenannte Seitenlichtblätter entstehen, der Winkel muss also so gewählt werden, dass diese sich möglichst nicht störend bemerkbar macht. Als Lichtquellen werden üblicherweise Laser verwendet. Das auf diese Weise erzeugte Lichtblatt weist gegenüber den herkömmlich erzeugten Lichtblättern eine erhöhte Schärfentiefe auf, d.h. die Ausdehnung des im wesentlichen ebenen Bereichs des Lichtblatts entlang der Beleuchtungsrichtung X ist höher als bei herkömmlich erzeugten Lichtblättern, so dass der verwertbare Ausschnitt des Bildfeldes des Abbildungsobjektivs größer ist. Ein weiterer Vorteil ist außerdem, dass aufgrund der speziellen Eigenschaften von Besselstrahlen der Schattenwurf in Beleuchtungsrichtung vermindert wird. Eine Beleuchtung mit Lichtblättern aus verschiedenen Richtungen in der Fokusebene ist daher nicht notwendig. Der Lichtstrahl, der in die Besseloptik eintritt, ist dabei häufig durch einen davor angeordneten Kollimator kollimiert, dies ist aber keine notwendige Bedingung.

Eine solche Besseloptik lässt sich auf verschiedene Weise realisieren. In einer ersten Ausgestaltung der Erfindung umfasst die Besseloptik eine Blende mit einem ersten und einem zweiten Spalt, wobei beide Spalte in Ebenen parallel zur Fokusebene und auf verschiedenen Seiten der Fokusebene liegen. Die Spalte begrenzen das einfallende, parallele und kollimierte Licht und wirken selbst als Lichtquellen, die zylinderförmige Lichtwellen abstrahlen. Die Besseloptik umfasst außerdem eine erste Zylinderlinse. Die Symmetrieachse des Zylinders, d.h. die Rotationsachse, liegt in der Fokusebene. Die Zylinderlinse wandelt die von den Spalten abgestrahlten Wellen in zwei ebene Wellen um und lenkt diese auf die Fokusebene, wo sie interferieren.

Je nach verwendeter Wellenlänge und in Abhängigkeit von den Parametern der Zylinderlinse - wie Brechkraft und Krümmungsradius - wird der Abstand der beiden Spalte gewählt, typische Werte für den Abstand der Spalte liegen beispielsweise im Bereich von 4 mm bis 12 mm, ihre Breite, die auch bestimmt, welche Ausdehnung das Lichtblatt entlang der Beleuchtungsrichtung hat, kann beispielsweise zwischen 10 µm und 100 µm liegen. Die Werte können jedoch auch außerhalb liegen, da sie letztendlich in Bezug auf die gewünschte Bildfeldgröße und Lichtblattdicke eingestellt werden müssen. Aufgrund der Verwendung der beiden Spalte kommt es jedoch zu Lichtverlusten, das Bild wird dunkler.

Dies lässt sich mit einer anderen Ausgestaltung der Erfindung vermeiden. Statt einer Blende mit zwei Spalten und einer Zylinderlinse umfasst die Besseloptik in diesem Fall ein Prisma. Die Eintrittsfläche des Prismas steht senkrecht zu der Richtung, aus der der Lichtstrahl kommt. Das Prisma verfügt über eine nicht-brechende Kante, die in der Fokusebene liegt. Von der Funktion her kann man sich das Prisma aus zwei separaten Prismen zusammengesetzt denken, wobei beide Prismen an ihrer - dem Prismenwinkel gegenüberliegenden - Grundfläche zusammengesetzt sind. Während die Eintrittsflächen beider Prismen parallel sind, schließen die Austrittsflächen mit der nicht-brechenden Kante einen Winkel von weniger als 90 Grad ein. Die Prismenwinkel sind jeweils gleich. Der Teil des Lichtstrahls, der oberhalb der Fokusebene verläuft, wird auf diese Weise in eine andere Richtung abgelenkt als derjenige Teil des Lichtstrahls, der unterhalb der Fokusebene auf das Prisma trifft.

Damit sich die erzeugten ebenen Wellen in der Fokusebene konstruktiv überlagern, muss der Prismenwinkel entsprechend klein gewählt werden. Typischerweise liegt der Prismenwinkel in einem Bereich von 5 Grad bis 40 Grad, wobei die Werte wesentlich durch Strahldurchmesser, Brechkraft und / oder gewünschte Bildfeldgröße bestimmt werden. Auch außerhalb dieses Bereichs liegende Werte sind daher möglich, wobei dann jedoch unter Umständen Verluste in Kauf genommen werden müssen. Die Ausdehnung des Lichtblattes hängt in diesem Fall von den besonderen Eigenschaften des Prismas wie dem Brechungsindex und dem Prismenwinkel ab. Die Apertur des Strahls kann die Ausdehnung des Lichtblatts entlang der Beleuchtungsrichtung (X) ebenfalls beeinflussen, sofern nicht die ganze Eintrittsfläche mit Licht bestrahlt wird. Auch die Dicke des Lichtblatts entlang der optischen Achse des Abbildungsobjektivs (Z) wird durch die Prismeneigenschaften, insbesondere den Prismenwinkel beeinflusst.

Statt eines Prismas kann auch ein DOE mit gleicher Wirkung verwendet werden, beispielsweise kann die Besseloptik ein Phasen- oder Transmissionsgitter aufweisen. Dieses wird in einer Zwischenbildebene des Beleuchtungsstrahlengangs platziert. Die beiden ebenen Wellen, die miteinander interferieren, können beispielsweise die Wellenzüge der positiven und negativen ersten Beugungsordnung des Gitters sein. Auch höhere Beugungsordnungen sind verwendbar. Der störende Lichtanteil der nullten Beugungsordnung wird bevorzugt ausgeblendet, wozu die Besseloptik entsprechende Mittel aufweist, beispielsweise eine Strahlfalle, welche mittig in einer der Zwischenbildebene im Strahlengang nachgeordneten Pupillenebene angeordnet ist.

Wie im Fall eines Prismas ist die Verwendung einer Zylinderlinse nicht zwingend, wenn das Gitter bzw. das Prisma in unmittelbarer Nähe der Fokusebene angeordnet werden können, da die Wellen unmittelbar nach dem Austritt aus dem Prisma bzw. dem Gitter miteinander interferieren. Ist eine solche Anordnung nicht möglich, so kann man sich durch die Verwendung weiterer optische Elemente behelfen. Die Besseloptik weist dann bevorzugt eine erste und zweite Zylinderlinse auf, wobei Prisma oder Phasen- oder Transmissionsgitter, erste Zylinderlinse und zweite Zylinderlinse entsprechend einer 4f-Geometrie ausgestaltet und angeordnet sind. Prisma bzw. Gitter befinden sich dabei in der beleuchtungsseitigen Brennebene der ersten Zylinderlinse, die optische Achse des Abbildungsobjektivs liegt etwa im Bereich der objektseitigen Brennebene der zweiten Zylinderlinse. Erste und zweite Zylinderlinse sind im wesentlichen identisch aufgebaut, jedoch spiegelsymmetrisch angeordnet. Die Spiegelebene befindet sich in der objektseitigen Brennweite der ersten Zylinderlinse und der beleuchtungsseitigen Brennebene der zweiten Zylinderlinse. Die Brennweiten der Linsen sind jeweils identisch, so dass sich das Prisma bzw. das Gitter sowie die Probe im vierfachen Abstand der Brennweite f der Zylinderlinsen zueinander befinden. Diese 4f-Anordnung bietet den Vorteil, dass das Licht in derjenigen Brennebene, die erster und zweiter Zylinderlinse gemeinsam ist, und auch als Fourierebene bezeichnet wird, auf verschiedene Weise manipuliert werden kann. Beispielsweise kann die Besseloptik eine Art von Apodisierungsblende in der Fourierebene umfassen, die die nullte Beugungsordnung des verwendeten Gitters ausblendet.

Die Verwendung einer optischen Anordnung mit 4f-Geometrie bei der Besseloptik ist vorteilhaft dann einsetzbar, wenn Prisma- oder Phasen- oder Transmissionsgitter nicht so nah, wie es erforderlich wäre, bei der Fokusebene angeordnet werden können, beispielsweise auch aus Platzgründen.

Es versteht sich, dass die vorstehend genannten und nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachstehend wird die Erfindung anhand der beigefügten Zeichnungen, die auch erfindungswesentliche Merkmale zeigen, näher erläutert. Es zeigen:
- Fig.1: den grundsätzlichen Aufbau eines SPIM-Mikroskops,
- Fig.2: das Prinzip einer Beleuchtungsoptik mit Spaltmaske und Zylinderlinse,
- Fig.3: eine Beleuchtungsoptik mit einem Prisma und
- Fig.4: eine 4f-Anordnung mit einer Phasenmaske.

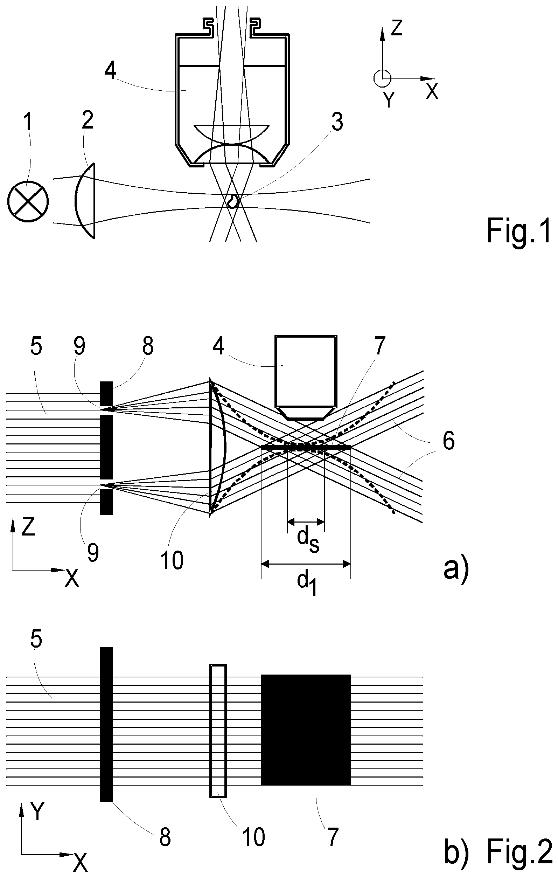

In Fig.1 ist zunächst der grundsätzliche Aufbau eines SPIM-Mikroskops dargestellt. Das Licht einer Beleuchtungsquelle 1 wird über eine Beleuchtungsoptik 2 zu einem Lichtblatt geformt und auf eine Probe 3 gelenkt. Probe und Lichtblatt befinden sich in der Fokusebene eines Abbildungsobjektivs 4. Die optische Achse des Abbildungsobjektivs 4 steht senkrecht zu der Richtung, aus der die Probe 3 beleuchtet wird. Die Beleuchtungsoptik 2 umfasst in der Regel mehrere optische Elemente, die das kohärente Licht der Beleuchtungsquelle 1 kollimieren und daraus ein Lichtblatt formen. Im Stand der Technik umfasst die Beleuchtungsoptik 2 in der Regel auch eine Zylinderlinse, deren flache Seite zur Probe weist und deren gewölbte Seite in Richtung der Beleuchtungsquelle weist. Im folgenden sollen mehrere Beispiele für Beleuchtungsoptiken 2 erläutert werden, mit denen die Erzeugung eines Lichtblatts mit erhöhter Schärfentiefe und verringertem Schattenwurf gegenüber aus dem Stand der Technik bekannten Anordnungen möglich ist.

In Fig.2 ist eine erste solche Anordnung dargestellt, in Fig.2a in einer Seitenansicht, die der Ansicht aus Fig.1 entspricht, und in Fig.2b in einer Ansicht, die beispielsweise einer Draufsicht aus Richtung des Abbildungsobjektivs 4 entspricht. Die in Fig.2 gezeigte Anordnung verfügt über eine Besseloptik, die aus einem kollimierten Strahl 5 zwei ebene Wellen 6 erzeugt. Die Besseloptik gibt dabei den ebenen Wellen 6 Ausbreitungsrichtungen derart vor, dass jede der Ausbreitungsrichtungen der ebenen Wellen mit der Fokusebene des Abbildungsobjektivs 4 einen spitzen Winkel einschließt. Der Betrag des Winkels ist für beide ebenen Wellen gleich, der absolute Wert ist in einem Fall jedoch positiv und im anderen negativ, so dass beide ebenen Wellen von verschiedenen Seiten auf die Fokusebene treffen. Dort interferieren sie konstruktiv, wodurch ein Lichtblatt 7 erzeugt wird.

Die in Fig.2 gezeigte Besseloptik umfasst eine Blende 8 mit zwei Spalten 9. Beide Spalte 9 liegen in Ebenen parallel zur Fokusebene, jedoch auf verschiedenen Seiten der Fokusebene. Die von den Spalten 9 ausgehenden näherungsweise zylinderförmigen beiden Wellen werden durch eine erste Zylinderlinse 10 zu den ebenen Wellen 6 umgeformt und auf die Fokusebene gelenkt. Die Rotationsachse der Zylinderlinse liegt dabei in der Fokusebene. Die Blende 8 ist dabei in einer Pupillenebene des Beleuchtungsstrahlengangs angeordnet.

Das auf diese Weise generierte Lichtblatt 7 hat gegenüber den herkömmlich erzeugten Lichtblättern eine erhöhte Schärfentiefe in der Beobachtungsrichtung Z. Ursache dafür ist, dass das auf diese Weise erzeugte Lichtblatt 7 in einem größeren Bereich entlang der Beleuchtungsrichtung X tatsächlich eine im wesentlichen ebene Form annimmt, nämlich in dem Bereich, wo sich die ebenen Wellen 6 konstruktiv überlagern. Dieser Bereich ist in Fig.2a mit d₁ gekennzeichnet. Zum Vergleich ist der klassische Verlauf des Lichtblattes durch die gestrichelte Linie gekennzeichnet. Der tatsächlich verwertbare Bereich hat in X-Richtung dann nur eine Ausdehnung dₛ. Die Ausdehnung d₁ hängt von der Breite der verwendeten Spalte 9 ab. Je breiter diese sind, desto größer ist im Prinzip auch der Bereich, der für eine konstruktive Interferenz zur Verfügung steht. Aufgrund der besonderen Eigenschaften von Besselstrahlen ist auch der Schattenwurf vermindert, da sie sich in einem relativ kurzen Abstand zu einer Probe 3 in der Fokusebene wieder selbst rekonstruieren.

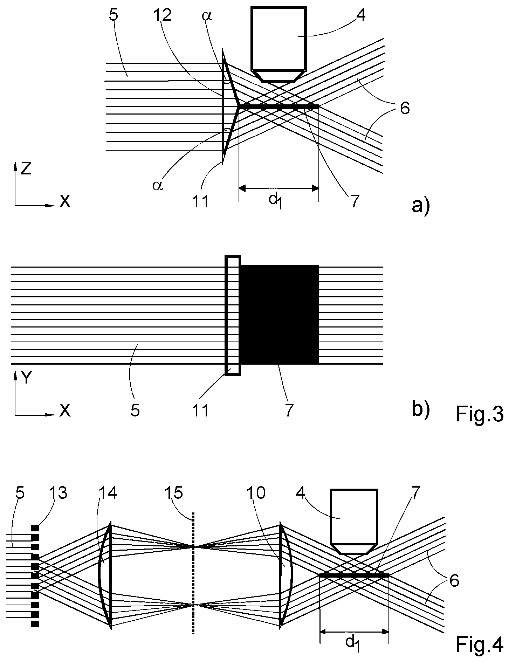

Nachteilig bei dieser Anordnung ist, dass durch die beiden Spalte 9 die zur Verfügung stehende Lichtmenge stark reduziert wird. Die Helligkeit wird dadurch stark vermindert. Dies lässt sich mit der in Fig.3 gezeigten Anordnung vermeiden. Analog zu Fig.2 zeigt Fig.3a eine Seitenansicht des Mikroskops entsprechend der Ansicht in Fig.1, und Fig.3b eine Draufsicht aus Richtung des Abbildungsobjektivs 4. Anstelle einer Blende mit zwei Spalten und einer Zylinderlinse umfasst die Besseloptik hier ein Prisma 11. Das Material des Prismas 11 wird in der Regel in Abhängigkeit von der Wellenlänge des Lichts gewählt. Das Prisma 11 kann auch auswechselbar gestaltet sein, so dass beispielsweise bei Wechsel der Wellenlänge auch das Prisma 11 gewechselt wird. Dies kann dabei mit einem dafür vorgesehenen Mechanismus auch automatisch erreicht werden. Um den gewünschten Effekt der konstruktiven Interferenz zu erreichen muss das Prisma 11 einen kleinen Prismenwinkel α aufweisen, er liegt üblicherweise im Bereich zwischen 5 Grad und 40 Grad, kann aber auch außerhalb dieses Bereichs liegen. Die Ausdehnung des Lichtblatts 7 in X-Richtung und seine Dicke in Z-Richtung werden von den Prismeneigenschaften, insbesondere vom Prismenwinkel α beeinflusst. Je kleiner der Prismenwinkel α ist, desto kleiner ist auch der spitze Winkel, den die Ausbreitungsrichtungen der ebenen Wellen mit der Fokusebene einschließen. Dies führt zu einer größeren Ausdehnung des Lichtblatts in Z-Richtung, aber auch in X-Richtung, so dass ein geeigneter Kompromiss gefunden werden muss. Das Prisma 11 verfügt über eine Eintrittsfläche 12, die senkrecht zur Strahlrichtung des Lichtstrahls 5 steht. Das Prisma 11 ist in der Regel einstückig gefertigt, kann aber beispielsweise auch aus zwei gleichartigen Prismen zusammengesetzt werden, wobei die beiden Prismen mit ihrer Grundfläche, die den Prismenwinkel α gegenüberliegen, zusammengesetzt sind, und sich die Grundflächen der Prismen in der Fokusebene befinden. Die beiden Austrittsflächen bilden in der Fokusebene eine nicht-brechende Kante. Der Teil des Lichtstrahls 5, der oberhalb der Fokusebene verläuft, wird auf diese Weise in eine andere Richtung abgelenkt, als der Teil des Lichtstrahls 5 in der unteren Hälfte.

Ebenso wie bei der in Fig.2 gezeigten Anordnung dient die Fokusebene hier nur als Bezug, es ist selbstverständlich möglich, falls es die Anwendung erfordert, die optische Achse des Abbildungsobjektivs 4 in einem anderen Winkel zur Beleuchtungsrichtung anzuordnen. Dies ist als rein konstruktive Maßnahme von den beschriebenen Anordnungen gleichermaßen erfasst.

Statt eines Prismas 11 kann auch ein entsprechend konstruiertes diffraktives optisches Element verwendet werden, beispielsweise ein Phasen- oder Transmissionsgitter. Dieses wird in einer Zwischenbildebene des Beleuchtungsstrahlengangs platziert. Die beiden ebenen Wellen 6 entsprechen hier der positiven und negativen ersten Beugungsordnung des Gitters. Das Gitter kann so ausgestaltet sein, dass die nullte Beugungsordnung unterdrückt wird.

Sollte es aufgrund von beispielsweise beengten Platzverhältnissen nicht möglich sein, Prisma 11 oder das Gitter in unmittelbarer Nähe zum Abbildungsobjektiv 4 zu platzieren, so kann man sich behelfen, indem beispielsweise das Gitter oder Prisma 11 über eine optische Anordnung mit 4f-Geometrie in die Fokusebene abgebildet wird. Eine solche Anordnung ist beispielhaft für ein Phasengitter 13 in Fig.4 dargestellt. Der Lichtstrahl 5 wird am Phasengitter 13 gebeugt, die nullte Beugungsordnung wird ausgeblendet, die positive und negative erste Beugungsordnung werden weiterverwendet. Das Phasengitter 13 befindet sich in der Brennebene einer zweiten Zylinderlinse 14, die die ebenen Wellen 6 entsprechend ihrer Frequenz auf Punkte in der probenseitigen Brennebene abbildet, weshalb diese auch als Fourierebene 15 bezeichnet wird. Dort können Manipulationen im Frequenzraum vorgenommen werden, beispielsweise kann eine Apodisierungsblende eingebracht werden.

Die Fourierebene 15 ist gleichzeitig auch die beleuchtungsseitige Brennebene der ersten Zylinderlinse 10, die entsprechend wieder ebene Wellen 6 erzeugt und auf die Fokusebene abbildet, wo sie konstruktiv interferieren. Die probenseitige Brennebene der ersten Zylinderlinse 10 befindet sich etwa im Bereich der optischen Achse des Abbildungsobjektivs 4.

Mit den vorangehend beschriebenen Anordnungen lässt sich die Schärfentiefe des Lichtblatts 7 bei der SPIM-Mikroskopie in Beleuchtungsrichtung erhöhen, wodurch bei der Beobachtung ein größeres Bildfeld zur Verfügung steht. Gleichzeitig kann der Schattenwurf vermindert werden.

## Patentansprüche

1. SPIM-Mikroskop, umfassend
- ein Abbildungsobjektiv (4) zur Abbildung einer Probe (3) auf einen Detektor und
- Mittel zur Beleuchtung der Probe (3) mit einem Lichtblatt (7) in der Fokusebene des Abbildungsobjektivs (4), umfassend eine kohärentes Licht abstrahlende Beleuchtungsquelle (1), wobei die optische Achse des Abbildungsobjektivs (4) senkrecht zu der Richtung steht, aus der die Probe (3) beleuchtet wird, wobei
- die Mittel zur Beleuchtung eine Besseloptik umfassen,
**dadurch gekennzeichnet, dass**, die Besseloptik geeignet ist, aus dem Lichtstrahl (5) mindestens zwei ebene Wellen (6) zu erzeugen und den mindestens zwei ebenen Wellen (6) Ausbreitungsrichtungen vorzugeben,
- wobei die Ausbreitungsrichtung jeder der ebenen Wellen (6) mit der Fokusebene jeweils einen spitzen Winkel einschließt, dessen Betrag für jede der ebenen Wellen (6) gleich ist, so dass die beiden ebenen Wellen (6) in der Fokusebene konstruktiv interferieren, wodurch ein Lichtblatt (7) erzeugt wird.

2. Mikroskop nach Anspruch 1, **dadurch gekennzeichnet, dass** die Besseloptik in einer Pupillenebene des Beleuchtungsstrahlengangs eine Blende (8) mit zwei Spalten (9) umfasst, wobei beide Spalte (9) in Ebenen parallel zur und auf verschiedenen Seiten der Fokusebene liegen, sowie eine erste Zylinderlinse (10).

3. Mikroskop nach Anspruch 1, **dadurch gekennzeichnet, dass** die Besseloptik ein Prisma (11) mit einer Eintrittsfläche (12) senkrecht zur Richtung des Lichtstrahls und einer nicht-brechenden Kante in der Fokusebene umfasst.

4. Mikroskop nach Anspruch 1, **dadurch gekennzeichnet, dass** die Besseloptik ein Phasengitter (13) oder Transmissionsgitter in einer Zwischenbildebene des Beleuchtungsstrahlengangs umfasst, wobei die Besseloptik bevorzugt Mittel zum Ausblenden der nullten Beugungsordnung von am Phasengitter (13) oder Transmissionsgitter gebeugtem Licht aufweist.

5. Mikroskop nach einem der Ansprüche 3 oder 4, **dadurch gekennzeichnet, dass** die Besseloptik eine erste und eine zweite Zylinderlinse(10, 14) aufweist, wobei Prisma (11) oder Phasengitter (13) oder Transmissionsgitter, erste Zylinderlinse (10) und zweite Zylinderlinse (14) entsprechend einer 4f-Geometrie mit einer Fourierebene (15) zwischen den beiden Zylinderlinsen (10, 14) ausgestaltet und angeordnet sind.

6. Mikroskop nach Anspruch 5, **dadurch gekennzeichnet, dass** in der Fourierebene (15) eine Apodisierungsblende angeordnet ist.

## Claims

1. SPIM microscope, comprising
- an imaging objective (4) for imaging a sample (3) onto a detector and
- means for illuminating the sample (3) with a light sheet (7) in the focal plane of the imaging objective (4), comprising an illumination source (1) which emits coherent light, wherein the optical axis of the imaging objective (4) is perpendicular to the direction from which the sample (3) is illuminated, wherein
- the means for illuminating comprise a Bessel optics unit,
**characterized in that** the Bessel optics unit is suitable for generating at least two plane waves (6) from the light beam (5) and for predefining directions of propagation for the at least two plane waves (6),
- wherein the direction of propagation of each of the plane waves (6) forms an acute angle with the focal plane in each instance, the absolute value of which angle is identical for each of the plane waves (6), so that the two plane waves (6) interfere constructively in the focal plane, whereby a light sheet (7) is generated.

2. Microscope according to Claim 1, **characterized in that** the Bessel optics unit, in a pupil plane of the illumination beam path, comprises a stop (8) with two slits (9), wherein both slits (9) lie in planes parallel to and on different sides of the focal plane, and a first cylindrical lens (10).

3. Microscope according to Claim 1, **characterized in that** the Bessel optics unit comprises a prism (11) with an entrance surface (12) perpendicular to the direction of the light beam and a non-refracting edge in the focal plane.

4. Microscope according to Claim 1, **characterized in that** the Bessel optics unit comprises a phase grating (13) or transmission grating in an intermediate image plane of the illumination beam path, wherein the Bessel optics unit preferably has means for blocking out the zero order of diffraction of light diffracted at the phase grating (13) or transmission grating.

5. Microscope according to either of Claims 3 and 4, **characterized in that** the Bessel optics unit has a first and a second cylindrical lens (10, 14), wherein prism (11) or phase grating (13) or transmission grating, first cylindrical lens (10) and second cylindrical lens (14) are designed and arranged according to a 4f geometry with a Fourier plane (15) between the two cylindrical lenses (10, 14).

6. Microscope according to Claim 5, **characterized in that** an apodization stop is arranged in the Fourier plane (15).

## Revendications

1. Microscope SPIM comprenant
- un objectif d'imagerie (4) pour l'imagerie d'un échantillon (3) sur un détecteur, et
- des moyens pour éclairer l'échantillon (3) avec une nappe de lumière (7) dans le plan focal de l'objectif d'imagerie (4), comprenant une source d'éclairage (1) émettant une lumière cohérente, l'axe optique de l'objectif d'imagerie (4) étant perpendiculaire à la direction d'éclairage de l'échantillon (3), dans lequel
- les moyens d'éclairage comprennent une optique de Bessel,
**caractérisé en ce que** l'optique de Bessel est appropriée pour générer au moins deux ondes planes (6) à partir du faisceau lumineux (5) et pour prédéfinir des directions de propagation pour les au moins deux ondes planes (6),
- dans lequel la direction de propagation de chacune des ondes planes (6) forme avec le plan focal un angle aigu dont la valeur absolue est la même pour chacune des ondes planes (6), de sorte que les deux ondes planes (6) interfèrent de manière constructive dans le plan focal, ce qui produit une nappe de lumière (7).

2. Microscope selon la revendication 1, **caractérisé en ce que** l'optique de Bessel comprend un diaphragme (8) présentant deux colonnes (9) dans un plan de pupille du trajet des faisceaux d'éclairage, dans lequel les deux colonnes (9) sont situées dans des plans parallèles au plan focal et sur des côtés différents de celui-ci, et une première lentille cylindrique (10).

3. Microscope selon la revendication 1, **caractérisé en ce que** l'optique de Bessel comprend un prisme (11) présentant une surface d'entrée (12) perpendiculaire à la direction du faisceau lumineux et une arête non réfringente dans le plan focal.

4. Microscope selon la revendication 1, **caractérisé en ce que** l'optique de Bessel comprend un réseau de phase (13) ou un réseau de transmission dans un plan d'image intermédiaire du trajet du faisceau d'éclairage, dans lequel l'optique de Bessel comporte de préférence des moyens destiné à masquer l'ordre zéro de diffraction de la lumière diffractée sur le réseau de phase (13) ou le réseau de transmission.

5. Microscope selon l'une quelconque des revendications 3 ou 4, **caractérisé en ce que** l'optique de Bessel comporte des première et seconde lentilles cylindriques (10, 14), dans lequel le prisme (11) ou le réseau de phase (13) ou le réseau de transmission, la première lentille cylindrique (10) et la seconde lentille cylindrique (14) sont configurés et agencés selon une géométrie 4f avec un plan de Fourier (15) entre les deux lentilles cylindriques (10, 14).

6. Microscope selon la revendication 5, **caractérisé en ce qu'**un diaphragme d'apodisation est agencé dans le plan de Fourier (15).
